(19) **Europäisches Patentamt**
**European Patent Office**
**Office européen des brevets**

(11) Veröffentlichungsnummer : **0 343 218 B1**

(12) **EUROPÄISCHE PATENTSCHRIFT**

(45) Veröffentlichungstag der Patentschrift :
**22.07.92 Patentblatt 92/30**

(51) Int. Cl.⁵ : **F27D 1/00,** F28F 13/00,
**G21B 1/00**

(21) Anmeldenummer : **89900052.5**

(22) Anmeldetag : **02.12.88**

(86) Internationale Anmeldenummer :
**PCT/EP88/01096**

(87) Internationale Veröffentlichungsnummer :
**WO 89/05430 15.06.89 Gazette 89/13**

(54) **MECHANISCH VERBUNDENER, MEHRTEILIGER KÖRPER MIT ELEMENTEN ZUR VERBESSERUNG DES WÄRMEFLUSSES ZWISCHEN DEN TEILEN.**

(30) Priorität : **04.12.87 AT 3209/87**

(43) Veröffentlichungstag der Anmeldung :
**29.11.89 Patentblatt 89/48**

(45) Bekanntmachung des Hinweises auf die
Patenterteilung :
**22.07.92 Patentblatt 92/30**

(84) Benannte Vertragsstaaten :
**DE FR GB IT**

(56) Entgegenhaltungen :
**DE-A- 2 552 686**

(56) Entgegenhaltungen :
**DE-A- 3 601 707**
**FR-A- 1 371 739**
**GB-A- 821 690**
**US-A- 3 161 478**

(73) Patentinhaber : **METALLWERK PLANSEE GESELLSCHAFT M.B.H.**
**A-6600 Reutte, Tirol (AT)**

(72) Erfinder : **STAFFLER, Reinhard**
**Schulweg 8**
**A-6600 Ehenbichl (AT)**

(74) Vertreter : **Lohnert, Wolfgang, Dr.**
**Metallwerk Plansee GmbH**
**A-6600 Reutte, Tirol (AT)**

## Beschreibung

Die Erfindung betrifft einen mechanisch verbundenen, mehrteiligen Körper, insbesondere ein Vakuumbauteil, mit Elementen zur Verbesserung des Wärmeflusses zwischen den Kontaktflächen einzelner Teile sowie eine vorteilhafte Verwendung derartiger Körper.

Es gibt viele technische Anwendungen, bei denen ein guter und vor allem ein zuverlässig vorherbestimmbarer Wärmeübergang zwischen zwei mechanisch miteinander verbundenen Körpern bzw. Bauteilen selbst bei lokal sehr unterschiedlichen und/oder zeitlich stark wechselnden, thermischen Beanspruchungen gewährleistet sein sollte. Gute und vor allem für verschiedene thermische Belastungszustände vorherbestimmbare Wärmeübergänge lassen sich durch die stoffschlüssige Verbindung zweier Bauteile, beispielsweise durch Löten oder Verschweißen, problemlos erreichen. Sobald zwei für einen Wärmeübergang vorgesehene Flächen aus Materialgründen oder wegen der geforderten Austauschbarkeit der Teile nicht stoffschlüssig miteinander verbunden werden können, kommt es infolge nur punktweiser Berührung und undefinierten Spalten zwischen Flächen in der Regel zu unbefriedigenden, nicht kalkulierbaren Verhältnissen.

Vor allem bei mechanisch verbundenen Vakuumbauteilen, die hohen Temperaturen ausgesetzt sind, führt schon geringer Verzug der beiden aneinandergrenzenden Kontaktflächen zu undefinierten, nicht vorherbestimmbaren Wärmeflüssen, da sich dann der Wärmeübergang aus einer Wärmeleitungs- und einer Wärmestrahlungskomponente in einem undefinierten Verhältnis zusammensetzt.

Im technischen Einsatzgebiet Hochtemperatur-Vakuumbauteile, wo für bestimmte Temperaturen und/oder Temperaturgradienten ein bestimmter Wärmefluß zwischen einzelnen mechanisch verbundenen Teilen gewährleistet sein muß, geht man aus Sicherheitsgründen den Weg, die Kontaktflächen auf drei definierte Punkte bzw. Bereiche zu beschränken, über welche eine praktisch vernachlässigbare Wärmeleitung stattfindet und den Wärmefluß praktisch ausschließlich mittels Wärmestrahlung zwischen zwei in einem gewissen Abstand zueinander stehenden Strahlungsflächen vorzunehmen. Die Berührung der beiden Flächen dient somit nur der geometrischen Fixierung der beiden Bauteile zueinander. Diese Ausführung läßt sich sinnvoll nur dort anwenden, wo zumindest eine der beiden Kontaktflächen so hohe Temperatur besitzt, daß der Wärmestrahlungsanteil zumindest in der Größenordnung des Wärmeleitungsanteil für eine vergleichbare Flächeneinheit liegt.

Für einen Wärmefluß vorgesehene Flächen mit Dreipunktauflage müssen weiters dort eingesetzt werden, wo andernfalls innerhalb der Kontaktfläche unbestimmte Berührungspunkte zu nicht tolerierbaren Wärmespannungen innerhalb eines Bauteiles führen können.

Zwischen einzelnen Teilen eines mechanisch verbundenen Körpers findet Wärmeleitung über die Berührungspunkte der Kontaktflächen, aber auch über die übrigen, durch einen Spalt getrennten Bereiche der Kontaktfläche statt, wann immer sich ein Medium im Spalt befindet. Bei nicht im Vakuum eingesetzten Bauteilen führt schon die Luft bzw. das Schutzgas im Spaltbereich zu einem nennenswerten Wärmeübergang durch Wärmeleitung. So ist es bekannt, zwischen mechanisch verbundene Bauteile zur Verbesserung des Wärmeflusses Leitfähigkeitspasten zu geben. Die Verwendung von Leitfähigkeitspasten ist aber auf Anwendungen bei vergleichsweise niedrigen Temperaturen beschränkt, wo der Dampfdruck derartiger Pasten nicht störend ist, keine Gefahr unerwünschter chemischer Reaktion besteht und wo schließlich nicht mit großer Sicherheit ein unkontrolliertes Austreten der Paste aus dem Spalt zwischen den Kontaktflächen vermieden werden muß.

Die zuvor genannten bekannten Ausführungsformen sind für mechanisch verbundene, mehrteilige Vakuumbauteile unbrauchbar, sobald diese Teile hohen Temperaturen ausgesetzt sind und wo von diesen große Wärmemengen abgeführt werden müssen.

Solche thermisch hoch belastete Bauteile sind z. B. die Schutzkacheln im Bereich der Ersten Wand von Fusionsreaktoren. Derartige Schutzkacheln sind nach einer bekannten Ausführung auf der dem Plasma abgewandten Seite mit Kühlstrukturen verbunden. Zur Verbesserung des Wärmeflusses zwischen den Schutzkacheln der Ersten Wand und den Kühlstrukturen wurde bereits vorgeschlagen, Graphitfolien zwischen die Kontaktflächen der mechanisch verbundenen Teile einzulegen. Die Graphitfolien weisen ausreichende Elastizität auf, um sich beim Verschrauben der Bauteile ausreichend plan an die Kontaktflächen anzulegen. Aufgrund ihrer lamellenartigen Struktur mit anisotroper Wärmeleitung weisen derartige Graphitfolien in Richtung Temperaturgradient eine gegenüber dem amorphen Kohlenstoff-Festkörper nur geringe Wärmeleitfähigkeit auf, wobei letztere wesentlich unter der von Metallen liegt. Graphitfolien haben für diese Anwendung zudem den Nachteil, daß aus ihnen einzelne Partikel herausbrechen und in das umgebende Hochvakuum gelangen können, wo sie höchst unerwünschte Nebenreaktionen, z. B. Plasma-Verunreinigungen, verursachen.

Die Aufgabe vorliegender Erfindung besteht darin, bei einem mechanisch verbundenen, mehrteiligen Körper, insbesondere bei einem Vakuumbauteil, das hohen Temperaturen und/oder großen Temperaturgradienten ausgesetzt ist, einen verbesserten und vor allem zuverlässig vorherbestimmbareren Wärmeübergang zwischen den einzelnen Teilen zu schaffen, ohne daß die zuvor beschriebenen Nachteile bekannter Ausführungen auftreten. Die Aufgabe vorliegender Erfindung besteht insbesondere darin, für einen aus einzelnen Teilen mechanisch verbundenen Bauteil einen definierten Wärmeübergang zu gewährleisten, unabhängig vom Grad des unvermeidlichen thermischen Verzuges solcher Teile, bzw. der sich gegenüberliegenden Kontaktflächen zweier Teile.

Die Aufgabe wird erfindungsgemäß dadurch gelöst, daß der mechanisch verbundene, mehrteilige Körper zwischen den Kontaktflächen dünnlagige, flexible und komprimierbare Elemente aus einem oder mehreren der Metalle der 5. und 6. Nebengruppe des Periodensystems oder deren Legierungen aufweist.

Die Metalle der 5. und 6. Nebengruppe, die Metalle Vanadium, Niob, Tantal, Chrom, Molybdän und Wolfram, haben sich für derartige Anwendung aufgrund ihrer hohen spezifischen Wärmeleitfähigkeit, ihres geringen Dampfdruckes und wegen ihrer über weite Temperaturbereiche günstigen mechanischen und chemischen Eigenschaften hervorragend bewährt. Wie ausgeführt, werden thermisch hochbelastete Bauteile in der Regel im Vakuum betrieben, wo Werkstoffe hohen Dampfdruckes und mangelnder chemischer und mechanischer Beständigkeit unbrauchbar sind. Mit der Verwendung der erfindungsgemäßen Metalle ist auch bei hohen Temperaturen hohe Flexibilität und Elastizität der Elemente gewährleistet.

Die Herstellung flexibler und komprimierbarer Elemente gemäß Erfindung läßt sich durch das mechanische Verweben von Drähten und feinen Folien aus den genannten Metallen erreichen, wie es in der Textilindustrie üblich ist. Die Elemente können ein- oder mehrlagige Gewebe sein. Sie können durch entsprechendes Verschlingen der Drähte zu filzartigen Matten ausgestaltet werden. Folien und Drähte mit einer Dicke im Bereich von 5 - 100 µm lassen sich auch unschwer zu ungerichteten Geflechten verpressen.

Je kleiner der Drahtquerschnitt, desto größer die effektive Kontaktfläche des flexiblen Elementes. Für die kleinstmöglichen Drahtquerschnitte sind deren wirtschaftliche Fertigung und ausreichende Duktilität maßgebend.

Die Flexibilität und elastische Komprimierbarkeit der Elemente erlaubt ein Verpressen bzw. Verspannen zwischen den Kontaktflächen unter Ausbildung einer Struktur, welche ein Maximum an Berührungspunkten zwischen dem Element und den angrenzenden Berührungsflächen, aber auch zwischen einzelnen Bereichen des Elementes selbst gewährleistet. Die Zahl der Berührungspunkte ist absolut gesehen um so größer, je kleiner die verwendeten Draht- bzw. Foliendurchmesser sind, je enger die Gewebe gearbeitet sind oder je dichter die ungerichtet verdichteten Drähte bzw. Folien verpreßt sind. Die Folien bzw. Drähte wird man vorteilhafterweise dann zu ein- oder mehrlagigen Feingeweben verarbeiten, wenn die Materialien ausreichende Duktilität und Verarbeitbarkeit besitzen und beim Einbringen der Elemente zwischen die Kontaktflächen zweier Bauteile vergleichweise große Anpreßdrucke aufgebracht werden können. Die Elemente werden vorteilhafterweise als Vliese mit filzartiger Struktur oder als verpreßte Geflechte mit ungerichteter Drahtstruktur ausgestaltet, wenn die Elemente beim Einbringen zwischen die Kontaktflächen zweier Teile verdichtet werden können, oder wenn der von der Kontaktfläche ausgehende Druck auf die Elemente nur vergleichweise gering sein kann.

Die mechanisch verbundenen Teile eines Körpers können aus gleichen oder verschiedenen Materialien, sowohl aus Metallen wie auch aus Nichtmetallen, bestehen.

Es hat sich besonders bewährt, die erfindungsgemäßen, flexiblen Elemente aus einer Vielzahl von übereinander gestapelten und in einem mechanischen Preßvorgang verdichteten Folien aufzubauen.

Dabei ist die Foliendicke der Festigkeit und Duktilität der jeweils verwendeten Metalle bzw. Metallegierungen so anzupassen, daß einerseits eine ausreichende Verdichtung und andererseits eine noch ausreichende Restelastizität und Flexibilität für die Elemente erhalten bleibt.

Die Anwendung der erfindungsgemäß verbundenen, mehrteiligen Körper liegt im weiten Bereich der Wärmetauscher bzw. Wärmesenker, vorzugsweise bei Vakuumanwendung. Sie liegt dort, wo durch chemische Reaktion oder durch elektrische Aufheizung lokal entstehende Wärme in vorberechenbaren Mengen zuverlässig von dort abgeführt werden muß. Ein bevorzugtes Anwendungsgebiet ist der Hochtemperatur- und Vakuumofenbau, z. B. Stromzuführungen, Schutzeinrichtungen gegen Wärmestrahlung. Ein anderes Anwendungsfeld ist die Luft- und Raumfahrt.

Schließlich liegt eine bevorzugte Anwendung im Bereich der Bauteile für die Erste Wand von Fusionsreaktoren.

Die Erfindung wird anhand eines Beispieles näher beschrieben.

Ein Bauteil, bzw. eine Schutzkachel im Bereich der Ersten Wand eines Fusionsreaktors aus Wolfram-Rhenium wird mit der entsprechenden Stahl-Kontaktfläche einer Kühlstruktur verschraubt. Zwischen die Kontaktflächen der zu verbindenden Bauteile wird ein flexibles Element aus Molybdän bzw. einer Molybdänlegierung eingelegt.

Das Molybdänelement ist ein tuchartiges Gewebe aus einem ca. 10 µm starken Molybdändraht. Das Gewebe wird nach dem Webvorgang unter einer mechanischen Presse unter leichter plastischer Verformung eingeebnet und verdichtet.

Messungen des Wärmeflusses zwischen den einzelnen Teilen ergab gegenüber der Ausführung mit einer elastischen Graphitfolie zwischen den zu verbindenden Bauteilen wesentlich höhere übertragbare Wärmemengen. Das Element war mechanisch so stabil, daß keine Gefahr der Verunreinigung des Plasmas durch unkontrolliertes Herauslösen einzelner Materialteilchen bestand.

## Patentansprüche

1. Mechanisch verbundener, mehrteiliger Körper, insbesondere Vakuumbauteil, mit Elementen zur Verbesserung des Wärmeflusses zwischen den Kontaktflächen einzelner Teile,
**dadurch gekennzeichnet,**
daß der Körper dünnlagige, flexible und komprimierbare Elemente aus einem oder mehreren der Metalle der 5. und 6. Nebengruppe des Periodensystems oder deren Legierungen aufweist.

2. Mechanisch verbundener, mehrteiliger Körper nach Anspruch 1, dadurch gekennzeichnet, daß die Elemente ein- oder mehrlagige Feingewebe aus Metalldraht sind.

3. Mechanisch verbundener, mehrteiliger Körper nach Anspruch 1, dadurch gekennzeichnet, daß die Elemente Vliese mit filzartiger Struktur sind.

4. Mechanisch verbundener, mehrteiliger Körper nach Anspruch 1, dadurch gekennzeichnet, daß die Elemente Geflechte aus verpreßtem, ungerichtetem Metalldraht, bzw. Metallfolien sind.

5. Mechanisch verbundener, mehrteiliger Körper nach Anspruch 1, dadurch gekennzeichnet, daß die Elemente viellagige Folienpakete sind.

6. Mechanisch verbundener, mehrteiliger Körper nach Anspruch 2 bis 5, dadurch gekennzeichnet, daß die für die Elemente verwendeten Drähte oder Folien eine Dicke im Bereich 5 - 100 µm aufweisen.

7. Mechanisch verbundener, mehrteiliger Körper nach Anspruch 1 - 6, dadurch gekennzeichnet, daß die Elemente an einen metallischen und einen nichtmetallischen Bauteil angrenzen.

8. Verwendung eines mechanisch verbundenen, mehrteiligen Körpers, nach einem der Ansprüche 1 - 7, als Bauteile für die Erste Wand eines Fusionsreaktors.

## Claims

1. Mechanically connected, multipart body, in particular a vacuum component, with elements for improving the heat flow between the contact faces of individual parts,
**characterised in that**
the body has thin-layered, flexible and compressible elements consisting of one or more of the metals of the 5th and 6th subsidiary group of the periodic table or their alloys.

2. Mechanically connected, multipart body according to claim 1, characterised in that the elements are single- or multi-layered fine fabrics composed of metal wire.

3. Mechanically connected, multipart body according to claim 1, characterised in that the elements are bonded fabrics with a felt-like structure.

4. Mechanically connected, multipart body according to claim 1, characterised in that the elements are meshes composed of compressed, omnidirectional metal wire or metal foils.

5. Mechanically connected, multipart body according to claim 1, characterised in that the elements are multi-layered foil bundles.

6. Mechanically connected, multipart body according to claim 2 to 5, characterised in that the wires or foils used for the elements have a thickness in the region of 5 - 100 µm.

7. Mechanically connected, multipart body according to claim 1 - 6, characterised in that the elements abut a metal and a non-metal component.

8. Use of a mechanically connected, multipart body according to one of claims 1 - 7 as components for the first wall of a fusion reactor.

## Revendications

1. Corps formé de plusieurs parties, assemblé mécaniquement, en particulier composant pour le vide, comprenant des éléments destinés à l'amélioration du flux thermique entre les surfaces de contact des parties individuelles,
**caractérisé en ce que**
le corps comprend des éléments compressibles, flexibles, en couches minces formés d'un ou plusieurs des métaux des sous-groupes 5. et 6. du système périodique ou de leurs alliages.

2. Corps formé de plusieurs parties, assemblé mécaniquement, selon la revendication 1, caractérisé en ce que les éléments sont de fins tissus en fil métallique en une ou plusieurs couches.

3. Corps formé de plusieurs parties, assemblé mécaniquement, selon la revendication 1, caractérisé en ce que les éléments sont des nappes à structure de feutre.

4. Corps formé de plusieurs parties, assemblé mécaniquement, selon la revendication 1, caractérisé en ce que les éléments sont des treillis en fils métalliques comprimés non orientés ou des feuilles métalliques.

5. Corps formé de plusieurs parties, assemblé mécaniquement, selon la revendication 1, caractérisé en ce que les éléments sont des paquets de feuilles en couches multiples.

6. Corps formé de plusieurs parties, assemblé mécaniquement, selon l'une des revendications 2 à 5, caractérisé en ce que l'épaisseur des fils ou des feuilles utilisés pour les éléments est dans la plage de 5 à 100 μm.

7. Corps formé de plusieurs parties, assemblé mécaniquement, selon l'une des revendications 1 à 6, caractérisé en ce que les éléments sont adjacents à un composant métallique et à un composant non métallique.

8. Utilisation d'un corps formé de plusieurs parties, assemblé mécaniquement, selon l'une des revendications 1 à 7, en tant que composants pour la première paroi d'un réacteur de fusion.